# EUROPEAN PATENT SPECIFICATION

(11) **EP 4 387 905 B1**
(45) Date of publication and mention of the grant of the patent: **17.06.2026**
(21) Application number: 22773299.7
(22) Date of filing: 19.08.2022
(51) Int. Cl.: B65D 85/816, A47J 31/36, A47J 31/44, B32B 3/26, B32B 7/022, B32B 7/05, B32B 27/32, B32B 27/36

(54) **BEVERAGE PREPARATION CAPSULE AND BEVERAGE PREPARATION SYSTEM COMPRISING SAID CAPSULE**
GETRÄNKZUBEREITUNGSKAPSEL UND GETRÄNKZUBEREITUNGSSYSTEM MIT DIESER KAPSEL
CAPSULE DE PRÉPARATION DE BOISSON ET SYSTÈME DE PRÉPARATION DE BOISSON COMPRENANT LADITE CAPSULE

(30) Priority: 20.08.2021 IT 202100022115; 11.08.2022 IT 202200017208
(43) Date of publication of application: 26.06.2024
(73) Proprietor: GRUPPO GIMOKA S.P.A., 20092 Cinisello Balsamo (MI) (IT)
(72) Inventor: PADELLI, Davide, 23009 Andalo Valtellino (SO) (IT)
(74) Representative: Studio Torta S.p.A.
(86) International application number: PCT/IB2022/057786
(87) International publication number: WO 2023/021475

(56) References cited:
- EP-A1- 3 454 700
- WO-A1-2012/110323
- WO-A1-2014/056718
- WO-A1-2014/202694
- WO-A1-2021/090186
- US-A1- 2015 047 509
- US-A1- 2015 158 666
- US-A1- 2016 325 923
- US-A1- 2019 135 484

## Description

### Technical Field of the Invention

The present invention relates to an optically recognisable capsule for preparing a beverage from a brewing or soluble food substance in an automatic beverage preparation machine, and to a beverage preparation system to prepare a beverage from a capsule containing a brewing or soluble food substance, the beverage preparation system comprising an automatic beverage preparation machine and a capsule.

### State of the Art

In the sector of coffee capsules, it is known to use technologies for recognising the capsules in the automatic beverage preparation machines in order to extract from the capsules information suitably memorised therein and useful for determining whether or not said capsules are suitable to be used in a given automatic beverage preparation machine and/or relative to operating parameters of the automatic beverage preparation machines in which such capsules can be used, such as, for example, pressure, temperature and dispensing time.

The known capsule recognition systems are based on various technologies, more commonly optical technologies for reading optical codes (bar codes, QR codes, etc..) carried by the capsules or for detecting optical properties (fluorescence and phosphorescence) of optical recognition chemical substances applied to a portion of capsule, inside or outside thereof.

The use of optical recognition substances is known for example from US 2016/325923 A1, US 2015/047509 A1, US 2015/158666 A1 and EP 3 454 700 B1.

In particular, in US 2015/158666 A1 and US 2016/325923 A1 the optical recognition substance is carried by the capsule body or by its lid, integrated within, or arranged on the outside or on the inside of the material with which said capsules are made.

In EP 3 454 700 B1 and in WO 2021/090186 A1, the optical recognition substance is carried by a permeable support element, in particular the brewing water distribution filter, arranged inside the capsule body, between the lid and the substance to be brewed.

In WO2012110323A1, a beverage production capsule is disclosed, which comprises a cup-shaped body designed to contain the brewing substance and tightly closed by a lid. The lid is made of a multilayer sheet comprising at least two layers of material welded together with the exception of an area designed to be perforated, in use, by a brewing water injection member so as to form a fluid-tight engagement with the outer surface of the injection member. No optical capsule recognition system is provided.

WO2021090186A1 discloses an apparatus for making a beverage, which uses a capsule containing a food substance and comprises an optical capsule recognition system. The optical recognition system is intended to recognise an identification element that is positioned inside the capsule. The optical recognition system comprises an optical reader that has a reading head associated with a piercer and intended to enter the capsule through a piercing made in said region of the capsule. The apparatus further comprises a detection system capable of detecting the reaching of a piercing position, interposed between a home position and an infusion position, wherein the piercer makes a piercing in the capsule. The optical recognition system is operatively connected to the detection system and is configured to perform the recognition based on a reading performed by the optical reader after the piercing position has been reached.

US2019135484 discloses a flexible membrane lid for a container comprising a top paper layer which is perforated to form a perimeter of at least one peelable portion and a bottom film layer. In some embodiments, the bottom film layer is partially adhered to the top paper layer, wherein the layers are not adhered within the perimeter of the peelable portion. In other embodiments, the layers are adhered with a pressure sensitive adhesive within the perimeter of the peelable portion and with a permanent adhesive in the remainder of the area between the top paper layer and bottom film layer. In other embodiments, the invention relates to a flexible membrane lid for a container comprising a top paper layer comprising a pull tab and a bottom film layer which is removably adhered to the top paper layer, wherein bottom film layer comprises a separate pull tab.

### Object and Summary of the Invention

The Applicant has observed that the optical capsule recognition technologies according to the prior art, despite being satisfactory in some respects, have considerable margins for constructive improvement and as to recognition reliability.

The object of the present invention is to provide an optically recognisable capsule for preparing a beverage in an automatic beverage preparation machine and which is constructively simpler and simultaneously ensures high recognition standards.

The object of the present invention is to provide an optically recognisable capsule for preparing a beverage in an automatic beverage preparation machine, as claimed in independent claim 1.

### Brief Description of the Drawings

Figures 1, 2 and 3 show in a perspective view different embodiments of an optically recognisable beverage preparation capsule according to the invention.
Figures 4, 5 and 6 show in cross-section and with enlarged parts different operating steps of an optical recognition process to optically recognise the capsule of Figure 1 in an automatic beverage preparation machine.
Figure 7 shows a tape roll for manufacturing lids to be bonded to optical recognition membranes for use with capsules of the type shown in Figure 1.

### Detailed Description of Preferred Embodiments of the Invention

The present invention will now be described in detail with reference to the accompanying figures in order to allow a person skilled in the art to implement it and use it. Various modifications to the described embodiments will be immediately apparent to the persons skilled in the art, the invention being defined in the appended claims.

The present invention is not to be considered limited to the described and illustrated embodiments, but it is to be granted the broadest scope of protection in accordance with the appended claims.

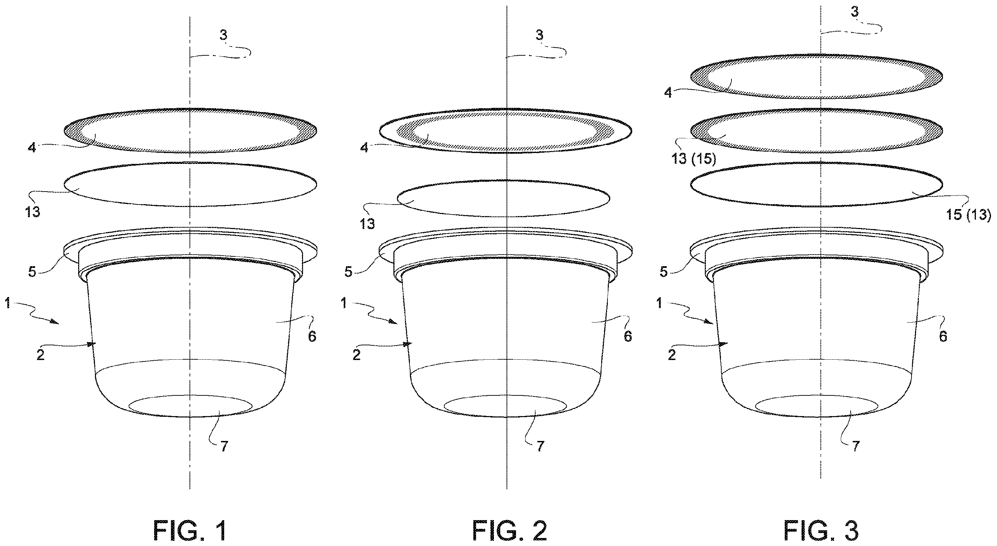

In Figure 1, reference numeral 1 indicates, as a whole, an optically recognisable beverage preparation capsule according to the present invention.

The capsule 1 is designed to contain a brewing food substance or a soluble food substance for producing a beverage, such as, for example, coffee, tea, chocolate, milk, broth, etc..

The capsule 1 comprises a cup-shaped body 2, which is designed to contain the food substance, has a longitudinal axis 3 and is closed at an upper end thereof by a lid 4 fluid-tightly welded to an outer annular flange 5 of the cup-shaped body 2 which externally surrounds the upper end of the cup-shaped body closed by the lid 4.

The cup-shaped body 2 comprises a side wall 6, which is coaxial to the axis 3 and preferably, but not necessarily, has a generally truncated cone shape flared towards the outer annular flange 5, and a bottom wall 7 extending in a direction generally transverse to the axis 3.

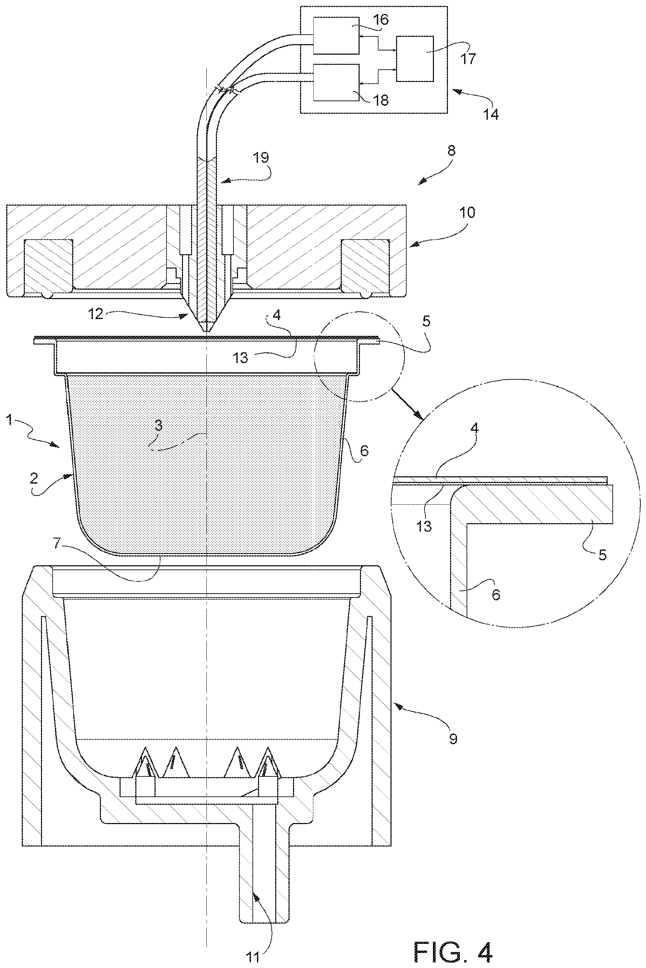

As shown in Figures 4 to 6, the capsule 1 is intended to be supplied, in use, to a brewing assembly 8 of a known automatic beverage preparation machine, in which a given quantity of a brewing fluid, normally hot water at a given pressure, is injected into the capsule 1 so as to brew or dissolve the food substance contained therein and produce a beverage.

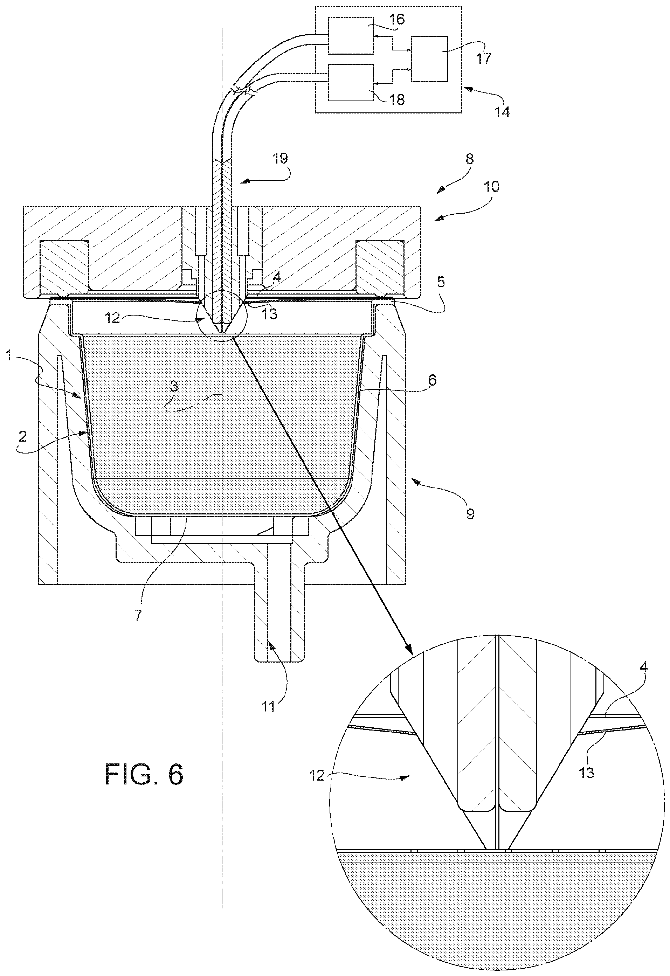

With reference to Figures 4 and 6, the brewing assembly 8 comprises a dispensing cup 9 and a fluid injection device 10 relatively movable between a capsule loading configuration in which a capsule 1 may be accommodated into the dispensing cup 9 and a brewing configuration, in which the dispensing cup 9 and the fluid injection device 10 are fluid-tightly coupled and mutually form a brewing chamber. In particular, the dispensing cup 9 has a cavity sized to accommodate a capsule 1 and comprises a beverage outlet duct 11 fluidically communicating with the cavity.

The fluid injection device 10 is arranged facing the open end of the dispensing cup 9 and comprises a perforation device 12 designed to perforate, in use, the lid 4 of a capsule 1 accommodated in the dispensing cup 9 to allow the brewing fluid to be injected into the capsule 1.

In the embodiment shown in the accompanying figures, the perforation device 12 comprises a single perforator, which is arranged, with respect to the dispensing cup 9, so as to perforate, in use, a central portion of the lid 4 of the capsule 1 and further acts as a brewing fluid injector provided with an inner brewing fluid supply duct.

In an embodiment not shown, the perforator may have the sole function of perforating the lid 4 so as to form an opening designed to allow a brewing fluid in the brewing chamber to flow into the capsule 1, which brewing fluid is supplied to the brewing chamber by means of one or more brewing fluid supply ducts formed in the fluid injection device 10 and distinct from the perforator.

In a further embodiment not shown, the perforation device 12 comprises two or more perforators, all of which or only a part of which may serve as brewing fluid injectors.

Still with reference to Figure 1, the capsule 1 comprises an optical recognition membrane 13, which is distinct from the lid 4, is arranged facing an inner face of the lid *4, i.e.,* a face of the lid 4 facing the inside of the capsule 1, and carries a recognition substance designed to enable the capsule 1 to be optically recognised inside the automatic beverage preparation machine, as is better described in the following.

In particular, the membrane 13 is arranged in the capsule 1, with respect to the lid 4 and to the cup-shaped body 2, so as to allow the capsule 1 to be optically recognised by an optical recognition device 14 of the automatic beverage preparation machine during the relative movement of the fluid injection device 10 and of the dispensing cup 9 from the capsule loading configuration to the brewing configuration.

The lid 4 and the membrane 13 may be bonded to each other and to the cup-shaped body 2 in different ways and by different technologies described in the following.

In particular, in the embodiment shown in Figure 1, the lid 4 and the membrane 13 substantially have the same size, equal to that of the outer diameter of the flange 5, and are permanently mutually bonded, for example by gluing, at their peripheral edges, while they are unbonded from each other, with or without mutual contact, at their central portions internal to the peripheral edges along which they are mutually bonded.

The lid 4 and the membrane 13 are then permanently bonded to the flange 5, in a continuous manner at their peripheral edges, for example by means of heat-sealing or gluing or any other connection technology suitable for the purpose.

In this embodiment, the peripheral edge of the membrane 13 is thus sandwiched between the flange 5 and the peripheral edge of the lid 4, and the membrane 13 is free to move with respect to the lid 4 at a central portion of the membrane 13, so as to be moved away from the lid 4 by the perforator device 12 during the relative movement of the fluid injection device 10 and of the dispensing cup 9 from the capsule loading configuration to the brewing configuration, so as to allow the capsule 1 to be optically recognised in the way described more specifically in the following.

In the embodiment illustrated in Figure 2, instead, the lid 4 continues to substantially have a size equal to that of the outer diameter of the flange 5, while the membrane 13 has a smaller size than that of the lid 4 and equal to or smaller than that of the inner diameter of the flange 5.

In this embodiment, the lid 4 is permanently continuously bonded to the flange 5, for example by heat-sealing or gluing or any other bonding technology suitable for the purpose, at a peripheral edge of the lid 4, while the membrane 13 is permanently bonded to the lid 4, for example by gluing, at a peripheral edge of the membrane 13.

Furthermore, also in this embodiment, the lid 4 and the membrane 13 are mutually unbonded, with or without mutual contact, at their central portions internal to the peripheral edge of the membrane 13, along which the membrane 13 is bonded to the lid 4.

Therefore, in this embodiment, the peripheral edge of the membrane 13 is not sandwiched between the flange 5 and the peripheral edge of the lid 4, but is radially internal to the flange 5, whereas the membrane 13 continues to be free to move with respect to the lid 4 at a central portion of the membrane 13, so as to be moved away from the lid 4 by the perforator device 12 during the relative movement of the fluid injection device 10 and of the dispensing cup 9 from the capsule loading configuration to the brewing configuration.

Therefore, unlike the first embodiment, in this second embodiment, while the peripheral edge of the lid 4 is permanently continuously bonded to the flange 5 so as to ensure the sealing of the capsule 1, the peripheral edge of the membrane 13 may be either continuously or discontinuously glued to the lid 4.

Figure 3 shows a third embodiment of the capsule 1, which comprises a further separation membrane 15, which is distinct from both the lid 4 and the membrane 13 and is arranged facing an inner face of the membrane 13, *i.e*., a face of the membrane 13 facing the inside of the capsule 1, so as to separate the membrane 13 from the food substance contained in the capsule 1.

The membrane 15 is bonded to the membrane 13, to the lid 4 and to the flange 5 in the same way as that previously described with reference to the first embodiment shown in Figure 1 in which the membrane 13 is bonded to the lid 4 and to the flange 5. Alternatively, the membrane 15 might be bonded to the membrane 13 for the entire extension of the membrane 13.

In a different embodiment not shown, the membrane 15 may have the same size of the membrane 13 in the second embodiment previously described with reference to Figure 2, and be permanently bonded thereto, for example by gluing, only along a peripheral edge of the membrane 15, either continuously or discontinuously, or on the entire face of the membrane 15.

In a yet further embodiment, shown in Figure 3 with reference numerals in parenthesis, the further membrane 15 is interposed between the lid 4 and the membrane 13. In this case, the membrane 15 is bonded to the membrane 13 only along a peripheral portion of the membrane 15, while it may be bonded to the lid 4 for the entire extension of its face facing the lid 4 or only along a peripheral portion of the membrane 15.

In the embodiments shown in Figures 1, 2 and 3, regardless of whether the capsule 1 contains a brewing food substance or a soluble food substance, the inner volume of the cup-shaped body 2 occupied by the food substance could be delimited at the top by a micro-perforated sheet (not shown), which is welded to the lateral part 6 of the cup-shaped body 2 at a given distance from the membrane 13, or from the membrane 15, if provided, and has the function of both preventing the contact between the food substance and the membrane 13, when the membrane 15 is not provided, and the function of favouring a uniform distribution and penetration of the brewing fluid in the food substance when the brewing fluid is supplied into the capsule 1 through the lid 4.

The cup-shaped body 2 is made of a material for food use and impermeable to external agents, *i.e*., having a high barrier property to the external agents, such as oxygen and vapours, preferably a plastic material, in particular PolyPropylene (PP) or PolyEthylene Terephthalate (PET) or Oriented PolyPropylene (OPP) or PolyButylenTerephthalate (PBT) or Ethylene-Vinyl Alcohol (EVOH) or their compounds, or still a metallic material, for example aluminium, and may be obtained by means of any forming process suitable for the purpose, in particular by thermoforming.

The lid 4 is made of a mono or multi-layer film of a material for food use and impermeable to external agents, in particular a plastic material, in particular PolyPropylene (PP) or PolyEthylene Terephthalate (PET) or Oriented PolyPropylene (OPP), or still a metallic material, for example (lacquered) aluminium, or their compounds, or still paper or other compostable materials suitable for the purpose.

The lid 4 may be partially or totally transparent to light, depending on the optical recognition method adopted to recognise the capsule 1, as it will be appreciated in the following.

The membranes 13 and 15 can be made of a same material or of different materials for food use, suitably but not necessarily, materials impermeable to fluids, in particular plastic materials, for example PolyPropylene (PP) or PolyEthylene Terephthalate (PET) or Oriented PolyPropylene (OPP), or metallic materials, for example aluminium, or still paper or other compostable materials suitable for the purpose, or their compounds.

Furthermore, the lid 4 and the membrane 13 have different elastic properties which allow the optical recognition substance to be recognised during the relative movement of the dispensing cup 9 and of the fluid injection device 10 between the capsule loading configuration and the brewing configuration in the way described in the following.

In particular, the membrane 13 has a thickness and/or an elastic modulus greater than those of the lid 4. Preferably, the membrane 13 has a thickness of two to four, suitably three, times greater than that of the lid 4, and/or an elastic modulus of four to six, suitably five, times greater than that of the lid 4.

In a preferred embodiment, the lid 4 is made of PolyEthylene Terephthalate (PET) with a thickness of about 12 µm and an elastic modulus between 457.5 and 762.5 MPa, while the membrane 13 is made of PolyPropylene, suitably Oriented (OPP), with a thickness of about 40 µm and an elastic modulus between 2.610 and 3.590 MPa.

Preferably, if the membrane 15 is provided and arranged between the membrane 13 and the brewing substance, the membrane 15 is made of a material that has an elastic behaviour equal or equivalent to that of the membrane 13, with respect to the lid 4.

When the membrane 15 is interposed between the lid 4 and the membrane 13, the membrane 15 is preferably made of a material that has an elastic behaviour similar to that of the lid 4 or anyway a behaviour that is less elastic than that of the membrane 13.

With regard to the optical recognition substance, it can be arranged on at least one of the faces of the membrane 13, preferably at least on the face of the membrane 13 facing the lid 4, or on both faces of the membrane 13. Preferably, the optical recognition substance can be arranged on the membrane 13 by extrusion during manufacturing of the membrane 13 and/or by printing on the already formed membrane 13.

The optical recognition substance is a known chemical substance which has luminescent properties of phosphorescence or fluorescence which appear when the optical recognition substance is impinged by an electromagnetic radiation generated by the optical recognition device 14 either in the spectrum of the light visible to human eye or in the spectrum of the light invisible to the human eye, in particular in the infrared or ultraviolet spectrum.

In particular, the optical recognition substance is a known chemical substance chosen so that the optical return signal generated thereby when impinged by an optical reading signal having given characteristics in terms of optical frequency and intensity, has one or various given characteristics in terms of optical frequency and intensity, and, if of the phosphorescent type, in terms of decay time.

By way of mere example, the optical read signal and the optical return signal could be of the type disclosed in EP 3 454 700 B1.

The optical recognition device 14 comprises an optical source 16 for example in the form of a photo-emitter, in particular a light emitting diode (LED), which is electronically controllable by an electronic control unit 17 to generate an optical reading signal having predetermined optical characteristics in terms of frequency and intensity.

The optical recognition device 14 further comprises an optical sensor 18 for example in the form of a photo-receiver, in particular a photodiode, arranged so as to capture and detect an optical return signal generated by the optical recognition substance in response to the optical reading signal and generate a corresponding electric output indicative of the characteristics of the optical return signal and, consequently, of the properties of the optical recognition substance.

The electric output of the optical sensor 18 is then inputted to the aforementioned electronic control unit 17, which is configured to receive and process the electric output of the optical sensor 18 to determine the properties of the optical recognition substance and recognise the capsule 1 and to control the operation of the automatic beverage preparation machine accordingly in a known manner and thus not specifically described.

The optical recognition device 14 further comprises an optical transport device 19 for example in the form of one or different light guides or optical fibres or of a light guide film arranged so as to transport and direct the optical reading signal towards the capsule 1 and to capture and transport towards the optical sensor 18 the optical return signal generated by the optical recognition substance when impinged by the optical reading signal.

The optical recognition device 14 can be entirely carried by the fluid injection device 10 or in part thereby and in part by the automatic beverage preparation machine.

In the embodiment shown in Figures 4, 5 and 6, the optical source 16, the optical sensor 18 and the electronic control unit 17 are carried by the automatic beverage preparation machine; whereas, the optical transport device 19 is carried by the perforation device 12 and comprises a feedforward light guide or optical fibre arranged so as to transport the optical reading signal generated by the optical source 16 towards the capsule 1, and a return light guide or optical fibre arranged so as to capture and transport towards the optical sensor 18 the optical return signal emitted by the optical recognition substance.

In different embodiments, the optical reading signal and the optical return signal could be transported by an optical transport device 19 comprising a single light guide or optical fibre or a light guide film by means of suitable optical decoupling devices or optical splitters. Furthermore, also the optical source 16 and the optical sensor 18 could be carried by the fluid injection device 10 and connected to the electronic control unit 17 by suitable electric wires.

As shown in Figures 4, 5 and 6, in use, the capsule 1 is first loaded into the brewing assembly 8 (Figure 4), then the fluid injection device 10 and the dispensing cup 9 are relatively moved so as to pass from the capsule loading configuration to the brewing configuration, in which the dispensing cup 9 and the fluid injection device 10 are fluid-tightly coupled.

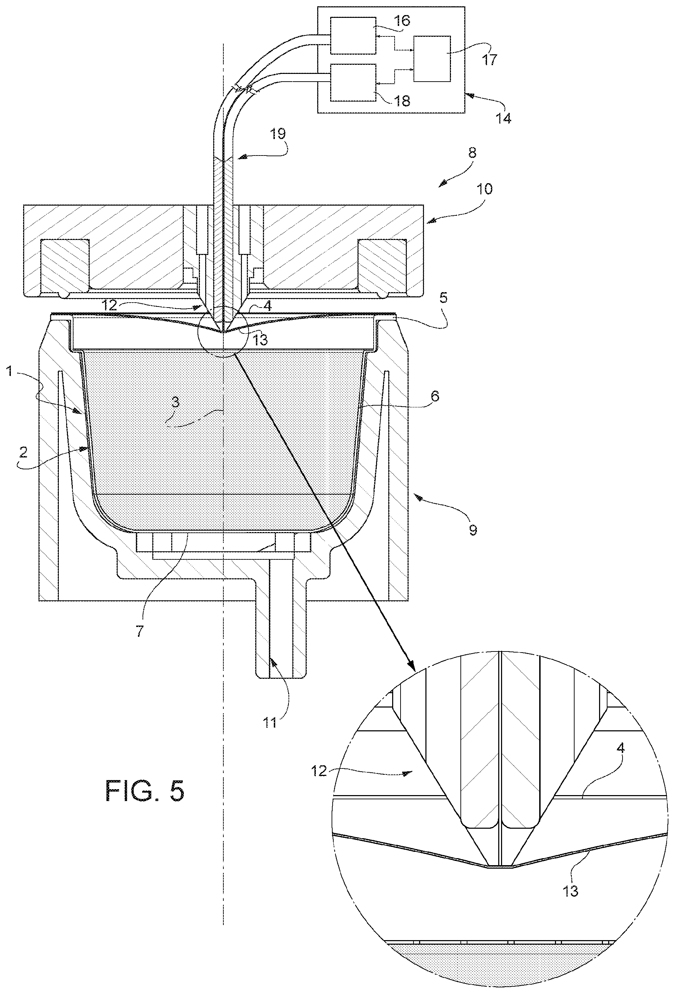

During the approach between the fluid injection device 10 and the dispensing cup 9, the perforation device 12 first perforates the lid 4 at the central area of the lid 4 in which it is unbonded to the membrane 13 (Figure 5).

The different elastic behaviour of the lid 4 with respect to the membrane 13 results in the lid 4 having a flexibility (much) lower than that of the membrane 13, thus allowing the perforation device 12 to initially perforate only the lid 4.

After the lid 4 has been perforated, the membrane 13, being separated from the lid 4 at a central area of the membrane 13 and having a greater flexibility than the lid 4, is moved away from the lid 4 by the perforation device 12, deforming without though being perforated for a certain section of the approach stroke between the fluid injection device 10 and the dispensing cup 9.

Once a breaking limit of the membrane 13 is exceeded, the membrane 13 is perforated by the perforation device 12, which thus penetrates in the capsule 1, thus enabling a given quantity of a brewing fluid, normally hot water at a given pressure, to be injected into the capsule 1, thus brewing or dissolving the food substance contained therein and producing the beverage (Figure 6).

The optical recognition device 14 can be operated by the electronic control unit 17 for all or part of the time employed by the fluid injection device 10 and by the dispensing cup 9 to move from the capsule loading configuration to the brewing configuration.

In particular, if the lid 4 is made of a material totally opaque to light, the optical recognition device 14 is suitably operated in the interval of time between the perforation of the lid 4 and the perforation of the membrane 13.

Should the optical recognition substance be present also on the opposite face of the membrane 13, *i.e*., the one facing the food substance, the optical recognition device 14 could be operated also for a certain time subsequent the perforation of the membrane 13, at least until the injection of the brewing fluid starts, so as to prolong the reading time of the capsule 1 in those cases in which the optical properties of the food substances are such to negatively influence the reading of the capsule 1, as for example it can occur in the case of soluble powdered milk, whose white colour can in some circumstances cause reading problems.

Should the lid 4 be made of a material at least partially transparent to light, the optical recognition device 14 can also be suitably operated prior to the perforation of the lid 4 so as to prolong the reading time of the capsule 1 so as either to read or at least to start reading the capsule 1 prior to the perforation of the lid 4.

With regard to the above description, it is suitable to specify that, in the cases where the perforation device 12 which carries the optical transport device 19 is distinct from the perforator/ brewing fluid injector and thus has the sole function of perforating the capsule 1 to allow the optical recognition substance to be recognised, the membrane 13 will have to be unbonded to the lid 4 in the area where the perforation device 12 perforates the lid 4 and for a sufficient extension so that the penetration of the perforation device 12 in the capsule 1 anyway produces the effect of moving the membrane 13 away from the lid 4.

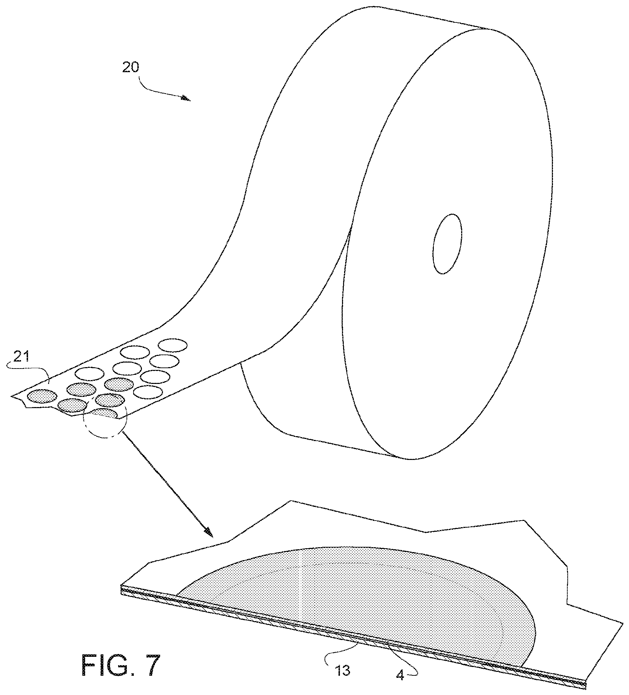

Furthermore, conveniently, according to what is shown in Figure 7, the lid 4 and the membrane 13 bonded thereto form, as a whole, a closure member of the capsule 1 which is obtained by punching a roll 20 of a multilayer tape 21. In particular, in order to manufacture the capsule shown in Figure 1, the multilayer tape 21 comprises a sheet of material for the lids 4 and a sheet of material for the membranes 13, which sheets are mutually bonded, for example by gluing, except for the areas where the membranes 13 have to be unbonded to the lids 4.

The same applies to the manufacture of the capsules shown in Figures 2 and 3.

In particular, the optically recognisable capsule according to the present invention is constructively much simpler than many of the optically recognisable capsules of the prior art because firstly it does not require any additional elements for supporting the optical recognition substance to be introduced in the capsule.

Furthermore, the fact that the optical recognition substance is arranged in the proximity of the lid significantly reduces, if not totally annuls, the risk of contamination of the food substance by the optical recognition substance because the optical recognition substance is not in direct contact with the food substance contained in the capsule and, especially, is not flown through by the brewing fluid, normally very hot, which could transport part of the optical recognition substance into the food substance.

## Claims

1. An optically recognisable capsule (1) for preparing a beverage from a brewing or soluble food substance in an automatic beverage preparation machine;
the capsule (1) being intended to be loaded, in use, into a brewing assembly (8) of the automatic beverage preparation machine, in which a brewing fluid is supplied into the capsule (1) so as to brew or dissolve the food substance therein to produce a beverage;
the brewing assembly (8) comprising a dispensing cup (9) and a brewing fluid injection device (10) relatively movable between a capsule loading configuration and a brewing configuration, in which the dispensing cup (9) and the brewing fluid injection device (10) are fluid-tightly coupled;
the capsule (1) comprising a cup-shaped body (2), which is designed to contain the food substance and is closed by a lid (4) designed to be perforated to allow the brewing fluid to be supplied into the capsule (1) to produce the beverage from the food substance;
the capsule (1) further comprising a membrane (13) distinct from, and arranged at an inner face of, the lid (4);
the membrane (13) being permanently bonded to the lid (4) along at least part of a peripheral edge of the membrane (13) and being unbonded from the lid (4) at an inner portion of the membrane (13) internal to the peripheral edge along which the membrane (13) is bonded to the lid (4),
said capsule (1) being **characterised in that**
the membrane (13) is an optical recognition membrane (13) carrying an optical recognition substance on at least part of at least one of the faces of the membrane (13) to allow the capsule (1) to be optically recognised in the automatic beverage preparation machine;
the inner portion of the membrane (13) being allowed to be moved away from the lid (4) by a perforation device (12) carried by the brewing fluid injection device (10) during a relative movement of the dispensing cup (9) and the brewing fluid injection device (10) between the capsule loading configuration and the brewing configuration to allow the capsule (1) to be optically recognised.

2. The capsule (1) of claim **1,** wherein the lid (4) and the membrane (13) have elastic properties such as to allow the inner portion of the membrane (13) to be moved away from the lid (4) during the relative movement of the dispensing cup (9) and the brewing fluid injection device (10) between the capsule loading configuration and the brewing configuration.

3. The capsule (1) of claim **1** or **2,** wherein the lid (4) and the membrane (13) have peripheral edges permanently bonded to an outer flange (5) of the cup-shaped body (2), such that the peripheral edge of the membrane (13) is sandwiched between the outer flange (5) and the peripheral edge of the lid (4), while the inner portion of the membrane (13) is free to be moved away from the lid (4).

4. The capsule (1) of claim **1** or **2,** wherein the lid (4) has a peripheral edge permanently bonded to an outer flange (5) of the cup-shaped body (2), and the membrane (13) has a peripheral edge that is internal to the outer flange (5) and is permanently bonded to the lid (4).

5. The capsule (1) of any one of the preceding claims, wherein the optical recognition substance is arranged on at least part of the face of the optical recognition membrane (13) facing the lid (4).

6. The capsule (1) of any one of the preceding claims, wherein the membrane (13) has a thickness and/or an elastic modulus greater than those of the lid (4), preferably a thickness of two to four, suitably three, times greater than that of the lid (4), and/or an elastic modulus of four to six, suitably five, times greater than that of the lid (4).

7. The capsule (1) of claim **6,** wherein the lid (4) is made of PolyEthylene Terephthalate (PET) with a thickness of about 12 µm and an elastic modulus between 457.5 and 762.5 MPa, while the membrane (13) is made of PolyPropylene (OPP) with a thickness of about 40 µm and an elastic modulus between 2.610 and 3.590 MPa.

8. The capsule (1) of any one of the preceding claims, wherein the optical recognition substance exhibits either phosphorescence or fluorescence properties.

9. A beverage preparation system to prepare a beverage from a capsule (1) containing a brewing or soluble food substance, the beverage preparation system comprising an automatic beverage preparation machine and a capsule (1) according to any one of the preceding claims;
the automatic beverage preparation machine comprises a brewing assembly (8) in which the capsule (1) is to be loaded and in which a brewing fluid is supplied into the capsule (1) so as to brew or dissolve the food substance contained therein to produce a beverage;
the brewing assembly (8) comprises a dispensing cup (9) and a brewing fluid injection device (10) relatively movable between a capsule loading configuration and a brewing configuration, in which the dispensing cup (9) and the brewing fluid injection device (10) are fluid-tightly coupled;
the brewing fluid injection device (10) comprises a perforation device (12) operable to perforate the lid (4) during a relative movement of the dispensing cup (9) and the brewing fluid injection device (10) between the capsule loading configuration and the brewing configuration;
the automatic beverage preparation machine further comprises an optical recognition device (14) operable to recognise the optical recognition substance during the relative movement of the dispensing cup (9) and of the brewing fluid injection device (10) between the capsule loading configuration and the brewing configuration.

10. The beverage preparation system of claim **9,** wherein the optical recognition device (14) comprises:
- an optical source (16) operable to generate an optical reading signal having predetermined optical characteristics;
- an optical sensor (18) operable to detect an optical return signal from the optical recognition substance in response to the optical reading signal and generating a corresponding electrical output indicative of the optical characteristics of the optical return signal;
- an optical transport device (19) arranged to transport and direct the optical reading signal towards the capsule (1) and to capture and transport the optical return signal towards the optical sensor (18); and
- an electronic control unit (17) configured to be communicatively coupled to the optical source (16) and to the optical sensor (18) to operate the optical source (16) and to receive and process the electrical output of the optical sensor (18) to recognize the optical recognition substance and control operation of the automatic beverage preparation machine accordingly.

11. The beverage preparation system of claim **10,** wherein the optical source (16), the optical sensor (18), and the electronic control unit (17) are carried by the automatic beverage preparation machine, while the optical transport device (19) is carried by the perforation device (12).

## Patentansprüche

1. Optisch erkennbare Kapsel (1) für die Zubereitung eines Getränks aus einer Brüh- oder löslichen Lebensmittelsubstanz in einem Getränkezubereitungsautomaten;
wobei die Kapsel (1) dazu bestimmt ist, im Gebrauch in eine Brühbaugruppe (8) des Getränkezubereitungsautomaten geladen zu werden, in der eine Brühflüssigkeit in die Kapsel (1) zugeführt wird, um die Lebensmittelsubstanz darin zu brühen oder aufzulösen, um ein Getränk herzustellen;
wobei die Brühbaugruppe (8) einen Ausgabebecher (9) und eine Brühflüssigkeitsinjektionsvorrichtung (10) umfasst, die zwischen einer Kapselladekonfiguration und einer Brühkonfiguration, in der der Ausgabebecher (9) und die Brühflüssigkeitsinjektionsvorrichtung (10) flüssigkeitsdicht gekoppelt sind, relativ beweglich sind;
wobei die Kapsel (1) einen becherförmigen Körper (2) umfasst, der dazu ausgelegt ist, die Lebensmittelsubstanz zu enthalten, und durch einen Deckel (4) verschlossen ist, der dazu ausgelegt ist, perforiert zu werden, um die Zufuhr der Brühflüssigkeit in die Kapsel (1) zu ermöglichen, um das Getränk aus der Lebensmittelsubstanz herzustellen;
wobei die Kapsel (1) ferner eine Membran (13) umfasst, die von der Innenseite des Deckels (4) getrennt und an dieser angeordnet ist;
wobei die Membran (13) entlang mindestens eines Teils eines Umfangsrandes der Membran (13) dauerhaft mit dem Deckel (4) verbunden ist und an einem inneren Abschnitt der Membran (13), der sich innerhalb des Umfangsrandes befindet, entlang dem die Membran (13) mit dem Deckel (4) verbunden ist, von dem Deckel (4) gelöst ist,
wobei die Kapsel (1) **dadurch gekennzeichnet ist, dass**
die Membran (13) eine optische Erkennungsmembran (13) ist, die eine optische Erkennungssubstanz auf mindestens einem Teil von mindestens einer der Flächen der Membran (13) trägt, um zu ermöglichen, dass die Kapsel (1) in dem Getränkezubereitungsautomaten optisch erkannt wird;
wobei es dem inneren Abschnitt der Membran (13) ermöglicht wird, durch eine Perforationsvorrichtung (12), die von der Brühflüssigkeitsinjektionsvorrichtung (10) getragen wird, während einer Relativbewegung des Ausgabebechers (9) und der Brühflüssigkeitsinjektionsvorrichtung (10) zwischen der Kapselladekonfiguration und der Brühkonfiguration von dem Deckel (4) wegführend bewegt zu werden, damit die Kapsel (1) optisch erkannt werden kann.

2. Kapsel (1) nach Anspruch **1,** wobei der Deckel (4) und die Membran (13) elastische Eigenschaften aufweisen, so dass der innere Abschnitt der Membran (13) während der Relativbewegung des Ausgabebechers (9) und der Brühflüssigkeitsinjektionsvorrichtung (10) zwischen der Kapselladekonfiguration und der Brühkonfiguration von dem Deckel (4) wegführend bewegt werden kann.

3. Kapsel (1) nach Anspruch **1** oder **2,** wobei der Deckel (4) und die Membran (13) Umfangsränder aufweisen, die dauerhaft mit einem Außenflansch (5) des becherförmigen Körpers (2) verbunden sind, sodass der Umfangsrand der Membran (13) sandwichartig zwischen dem Außenflansch (5) und dem Umfangsrand des Deckels (4) angeordnet ist, während der innere Abschnitt der Membran (13) frei von dem Deckel (4) wegführend bewegt werden kann.

4. Kapsel (1) nach Anspruch **1** oder **2,** wobei der Deckel (4) einen Umfangsrand aufweist, der dauerhaft mit einem Außenflansch (5) des becherförmigen Körpers (2) verbunden ist, und die Membran (13) einen Umfangsrand aufweist, der innerhalb des Außenflansches (5) liegt und dauerhaft mit dem Deckel (4) verbunden ist.

5. Kapsel (1) nach einem der vorhergehenden Ansprüche, wobei die optische Erkennungssubstanz auf mindestens einem Teil der dem Deckel (4) zugewandten Fläche der optischen Erkennungsmembran (13) angeordnet ist.

6. Kapsel (1) nach einem der vorhergehenden Ansprüche, wobei die Membran (13) eine Dicke und/oder ein Elastizitätsmodul aufweist, die bzw. das größer sind als die des Deckels (4), vorzugsweise eine Dicke, die zwei- bis viermal, zweckmäßigerweise dreimal, größer ist als die des Deckels (4), und/oder ein Elastizitätsmodul, das vier- bis sechsmal, zweckmäßigerweise fünfmal, größer ist als das des Deckels (4).

7. Kapsel (1) nach Anspruch **6,** wobei der Deckel (4) aus Polyethylenterephthalat (PET) mit einer Dicke von etwa 12 µm und einem Elastizitätsmodul zwischen 457,5 und 762,5 MPa gefertigt ist, während die Membran (13) aus Polypropylen (OPP) mit einer Dicke von etwa 40 µm und einem Elastizitätsmodul zwischen 2,610 und 3,590 MPa gefertigt ist.

8. Kapsel (1) nach einem der vorhergehenden Ansprüche, wobei die optische Erkennungssubstanz entweder Phosphoreszenz- oder Fluoreszenzeigenschaften aufweist.

9. Getränkezubereitungssystem zum Zubereiten eines Getränks aus einer Kapsel (1), die eine Brüh- oder löslichen Lebensmittelsubstanz enthält, wobei das Getränkezubereitungssystem einen Getränkezubereitungsautomaten und eine Kapsel (1) nach einem der vorhergehenden Ansprüche umfasst;
der Getränkezubereitungsautomat eine Brühbaugruppe (8) umfasst, in die die Kapsel (1) geladen werden soll und in der eine Brühflüssigkeit in die Kapsel (1) zugeführt wird, um die darin enthaltene Lebensmittelsubstanz zu brühen oder aufzulösen, um ein Getränk herzustellen;
wobei die Brühbaugruppe (8) einen Ausgabebecher (9) und eine Brühflüssigkeitsinjektionsvorrichtung (10) umfasst, die zwischen einer Kapselladekonfiguration und einer Brühkonfiguration, in der der Ausgabebecher (9) und die Brühflüssigkeitsinjektionsvorrichtung (10) flüssigkeitsdicht gekoppelt sind, relativ beweglich sind;
die Brühflüssigkeitsinjektionsvorrichtung (10) eine Perforationsvorrichtung (12) umfasst, die betreibbar ist, um den Deckel (4) während einer Relativbewegung des Ausgabebechers (9) und der Brühflüssigkeitsinjektionsvorrichtung (10) zwischen der Kapselladekonfiguration und der Brühkonfiguration zu perforieren;
der Getränkezubereitungsautomat ferner eine optische Erkennungsvorrichtung (14) umfasst, die betreibbar ist, um die optische Erkennungssubstanz während der Relativbewegung des Ausgabebechers (9) und der Brühflüssigkeitsinjektionsvorrichtung (10) zwischen der Kapselladekonfiguration und der Brühkonfiguration zu erkennen.

10. Getränkezubereitungssystem nach Anspruch **9,** wobei die optische Erkennungsvorrichtung (14) Folgendes umfasst:
- eine optische Quelle (16), die betreibbar ist, um ein optisches Lesesignal mit vorbestimmten optischen Eigenschaften zu erzeugen;
- einen optischen Sensor (18), der betreibbar ist, um ein optisches Rücksignal von der optischen Erkennungssubstanz als Reaktion auf das optische Lesesignal zu detektieren und eine entsprechende elektrische Ausgabe zu erzeugen, die die optischen Eigenschaften des optischen Rücksignals anzeigt;
- eine optische Transportvorrichtung (19), die angeordnet ist, um das optische Lesesignal zu der Kapsel (1) zu transportieren und zu leiten und das optische Rücksignal zu erfassen und es zu dem optischen Sensor (18) zu transportieren; und
- eine elektronische Steuereinheit (17), die so konfiguriert ist, dass sie kommunikativ mit der optischen Quelle (16) und dem optischen Sensor (18) gekoppelt ist, um die optische Quelle (16) zu betreiben und die elektrische Ausgabe des optischen Sensors (18) zu empfangen und zu verarbeiten, um die optische Erkennungssubstanz zu erkennen und den Betrieb des Getränkezubereitungsautomaten entsprechend zu steuern.

11. Getränkezubereitungssystem nach Anspruch **10,** wobei die optische Quelle (16), der optische Sensor (18) und die elektronische Steuereinheit (17) von dem Getränkezubereitungsautomaten getragen werden, während die optische Transportvorrichtung (19) von der Perforationsvorrichtung (12) getragen wird.

## Revendications

1. Capsule optiquement reconnaissable (1) pour la préparation d'une boisson à partir d'une substance alimentaire à infuser ou soluble dans une machine automatique de préparation de boissons ;
la capsule (1) étant destinée à être chargée, en cours d'utilisation, dans un ensemble d'infusion (8) de la machine automatique de préparation de boissons, dans lequel un liquide d'infusion est introduit dans la capsule (1) afin d'infuser ou de dissoudre la substance alimentaire qu'elle contient pour produire une boisson ;
l'ensemble d'infusion (8) comprenant un gobelet de distribution (9) et un dispositif d'injection de liquide d'infusion (10) relativement mobile entre une configuration de chargement de capsule et une configuration d'infusion, dans laquelle le gobelet de distribution (9) et le dispositif d'injection de liquide d'infusion (10) sont couplés de manière étanche aux fluides ;
la capsule (1) comprenant un corps en forme de coupelle (2), conçu pour contenir la substance alimentaire et fermé par un couvercle (4) conçu pour être perforé afin de permettre au liquide d'infusion d'être introduit dans la capsule (1) pour produire la boisson à partir de la substance alimentaire ;
la capsule (1) comprenant en outre une membrane (13) distincte du couvercle (4) et disposée sur la face interne de celui-ci ;
la membrane (13) étant liée de manière permanente au couvercle (4) le long d'au moins une partie d'un bord périphérique de la membrane (13) et n'étant pas liée au couvercle (4) au niveau d'une partie intérieure de la membrane (13) située à l'intérieur du bord périphérique le long duquel la membrane (13) est liée au couvercle (4),
ladite capsule (1) étant **caractérisée en ce que** la membrane (13) est une membrane de reconnaissance optique (13) portant une substance de reconnaissance optique sur au moins une partie d'au moins une des faces de la membrane (13) pour permettre la reconnaissance optique de la capsule (1) dans la machine automatique de préparation de boissons ;
la partie intérieure de la membrane (13) pouvant être éloignée du couvercle (4) par un dispositif de perforation (12) porté par le dispositif d'injection de liquide d'infusion (10) lors d'un mouvement relatif du gobelet de distribution (9) et du dispositif d'injection de liquide d'infusion (10) entre la configuration de chargement de la capsule et la configuration d'infusion pour permettre à la capsule (1) d'être reconnue optiquement.

2. Capsule (1) selon la revendication **1,** dans laquelle le couvercle (4) et la membrane (13) ont des propriétés élastiques qui permettent à la partie intérieure de la membrane (13) de s'écarter du couvercle (4) pendant le mouvement relatif du gobelet de distribution (9) et du dispositif d'injection du liquide d'infusion (10) entre la configuration de chargement de la capsule et la configuration d'infusion.

3. Capsule (1) selon la revendication **1** ou **2,** dans laquelle le couvercle (4) et la membrane (13) ont des bords périphériques liés de façon permanente à un rebord extérieur (5) du corps en forme de coupelle (2), de sorte que le bord périphérique de la membrane (13) est pris en sandwich entre le rebord extérieur (5) et le bord périphérique du couvercle (4), tandis que la partie intérieure de la membrane (13) est libre de s'éloigner du couvercle (4).

4. Capsule (1) selon la revendication **1** ou **2,** dans laquelle le couvercle (4) a un bord périphérique lié de façon permanente à un rebord extérieur (5) du corps en forme de coupelle (2), et la membrane (13) a un bord périphérique qui est interne au rebord extérieur (5) et est lié de façon permanente au couvercle (4).

5. Capsule (1) selon l'une quelconque des revendications précédentes, dans laquelle la substance de reconnaissance optique est disposée sur au moins une partie de la face de la membrane de reconnaissance optique (13) tournée vers le couvercle (4).

6. Capsule (1) selon l'une quelconque des revendications précédentes, dans laquelle la membrane (13) a une épaisseur et/ou un module d'élasticité supérieurs à ceux du couvercle (4), de préférence une épaisseur de deux à quatre fois, de préférence trois fois, supérieure à celle du couvercle (4), et/ou un module d'élasticité de quatre à six fois, de préférence cinq fois, supérieur à celui du couvercle (4).

7. Capsule (1) selon la revendication **6,** dans laquelle le couvercle (4) est en polyéthylène téréphtalate (PET) d'une épaisseur d'environ 12 µm et d'un module d'élasticité compris entre 457,5 et 762,5 MPa, tandis que la membrane (13) est en polypropylène (OPP) d'une épaisseur d'environ 40 µm et d'un module d'élasticité compris entre 2,610 et 3,590 MPa.

8. Capsule (1) selon l'une quelconque des revendications précédentes, dans laquelle la substance de reconnaissance optique présente des propriétés de phosphorescence ou de fluorescence.

9. Système de préparation de boissons pour préparer une boisson à partir d'une capsule (1) contenant une substance alimentaire à infuser ou soluble, le système de préparation de boissons comprenant une machine automatique de préparation de boissons et une capsule (1) selon l'une quelconque des revendications précédentes ;
la machine automatique de préparation de boissons comprend un ensemble d'infusion (8) dans lequel la capsule (1) doit être chargée et dans lequel un liquide d'infusion est introduit dans la capsule (1) afin d'infuser ou de dissoudre la substance alimentaire qu'elle contient pour produire une boisson ;
l'ensemble d'infusion (8) comprend un gobelet de distribution (9) et un dispositif d'injection de liquide d'infusion (10) relativement mobile entre une configuration de chargement de capsule et une configuration d'infusion, dans laquelle le gobelet de distribution (9) et le dispositif d'injection de liquide d'infusion (10) sont couplés de manière étanche au fluide ;
le dispositif d'injection de liquide d'infusion (10) comprend un dispositif de perforation (12) pouvant perforer le couvercle (4) lors d'un mouvement relatif du gobelet de distribution (9) et du dispositif d'injection de liquide d'infusion (10) entre la configuration de chargement de la capsule et la configuration d'infusion ;
la machine automatique de préparation de boissons comprend en outre un dispositif de reconnaissance optique (14) pouvant reconnaître la substance de reconnaissance optique pendant le mouvement relatif du gobelet de distribution (9) et du dispositif d'injection du liquide d'injection (10) entre la configuration de chargement des capsules et la configuration d'infusion.

10. Système de préparation de boissons selon la revendication **9,** dans lequel le dispositif de reconnaissance optique (14) comprend :
- une source optique (16) pouvant générer un signal de lecture optique ayant des caractéristiques optiques prédéterminées ;
- un capteur optique (18) pouvant détecter un signal de retour optique provenant de la substance de reconnaissance optique en réponse au signal de lecture optique et de générer une sortie électrique correspondante indiquant les caractéristiques optiques du signal de retour optique ;
- un dispositif de transport optique (19) conçu pour transporter et diriger le signal de lecture optique vers la capsule (1) et pour capturer et transporter le signal de retour optique vers le capteur optique (18) ; et
- une unité de commande électronique (17) configurée pour être couplée de manière communicative à la source optique (16) et au capteur optique (18) afin de faire fonctionner la source optique (16) et de recevoir et traiter la sortie électrique du capteur optique (18) pour reconnaître la substance de reconnaissance optique et commander le fonctionnement de la machine automatique de préparation de boissons en conséquence.

11. Système de préparation de boissons selon la revendication **10,** dans lequel la source optique (16), le capteur optique (18) et l'unité de commande électronique (17) sont portés par la machine automatique de préparation de boissons, tandis que le dispositif de transport optique (19) est porté par le dispositif de perforation (12).
